# EUROPEAN PATENT APPLICATION

(11) **EP 4 755 574 A1**
(43) Date of publication of application: **10.06.2026**
(21) Application number: 24891288.3
(22) Date of filing: 06.11.2024
(51) Int. Cl.: B23Q 3/157, B23Q 3/155

(54) **TOOLING REPLACEMENT MECHANISM AND MACHINE TOOL PROVIDED WITH SAME**

(30) Priority: 14.11.2023 JP 2023193841
(71) Applicant: Citizen Machinery Co., Ltd., Nagano 389-0206 (JP)
(72) Inventor: AOYAGI, Atsushi, Kitasaku-gun, Nagano 389-0206 (JP)
(74) Representative: Ullrich & Naumann PartG mbB
(86) International application number: PCT/JP2024/039350
(87) International publication number: WO 2025/105249

(57) **Abstract**

A tooling changing mechanism that increases the degree of freedom in arranging a turret inside a machining chamber and a machine tool comprising the same are provided.

A tooling changing mechanism for a machine tool comprises: a tooling holding unit 100 mounted to the turret 12 and configured to detachably hold a tooling T for machining a workpiece W; and a tooling changing device 200 that is arranged on a rear side of the turret 12 and outside the machining chamber 10a, moves in a front-rear direction, and stores the tooling T, wherein the tooling changing device 200 has a tooling magazine 230 for storing the tooling T, and a tooling detachment unit 240 for detaching the tooling T held by the tooling holding unit 100 from the tooling holding unit 100, and the tooling T held by the tooling holding unit 100 is detached from the tooling holding unit 240 outside the machining chamber 10a while being gripped by the tooling magazine 230 of the tooling changing device 200.

## Description

### [Technical Field]

The present invention relates to a tooling changing mechanism and a machine tool comprising the same.

### [Background Art]

Conventionally, a machine tool having a machining chamber, in which a workpiece is machined, is known, which comprises: inside the machining chamber, a spindle that rotatably and detachably grips the workpiece; a turret that is arranged facing the spindle; a turret support that supports the turret to be index-rotatable; and a tooling storage device that stores and changes tools and tooling mounted to the turret, wherein the tooling storage device is arranged on the same side as the spindle, and tooling is changed by driving a tooling detachment unit, which is provided on the turret support, the turret, and the tooling storage device (see, for example, Patent Literature 1).

### [Citation List]

### [Patent Literature]

[Patent Literature 1] JP 2022-063936 A

### [Summary of Invention]

### [Technical Problem]

In the above-described machine tool, the tooling storage device is provided inside the machining chamber and near the spindle, thus there are restrictions on the positions, the number, and the range of movement of turrets, and there is still room for further improvement in increasing the degree of freedom in arranging the respective members constituting the tooling changing mechanism for changing tooling.

Therefore, the present invention solves the problem of the prior art as described above, and the object of the present invention is to provide a tooling changing mechanism that increases the degree of freedom in arranging the turret inside the machining chamber, and a machine tool comprising the same.

### [Solution to Problem]

The invention according to claim 1 is a tooling changing mechanism for a machine tool comprising: a turret arranged inside a machining chamber and movable in a front-rear direction and a left-right direction perpendicular to the front-rear direction; a tooling holding unit mounted to the turret and configured to detachably hold a tooling, which consists of a rotary tool for machining a workpiece and a tool holder for detachably holding the rotary tool; and a tooling changing device arranged on a rear side of the turret and outside the machining chamber for storing the tooling, wherein the tooling holding unit has a tool holder holding portion extending in the left-right direction, to which the tool holder of the tooling is mounted in a retracted state, the tooling changing device has a tooling magazine for storing the tooling, and a tooling detachment unit for detaching the tooling held by the tooling holding unit from the tooling holding unit, and the tooling held by the tooling holding unit is detached from the tooling holding unit outside the machining chamber while being gripped by the tooling magazine of the tooling changing device. As a result, the above-described problem is resolved.

The invention according to claim 2 is that, in addition to the configuration of the tooling changing mechanism according to claim 1, the tooling detachment unit of the tooling changing device moves in the left-right direction relative to the tooling magazine of the tooling changing device, and, while the tooling magazine of the tooling changing device grips the tooling held by the tooling holding unit outside the machining chamber, the turret moves in the left-right direction to detach the tooling from the tooling holding unit. As a result, the above-described problem is further resolved.

The invention according to claim 3 is that, in addition to the configuration of the tooling changing mechanism according to claim 1, the tooling detachment unit of the tooling changing device has a pressing member movable forward and backward toward a rear end of the tooling holding unit, and a claw member movable forward and backward parallel to a movement direction of the pressing member, the pressing member of the tooling detachment unit of the tooling changing device presses the rear end of the tooling holding unit to release the retracted state of the tool holder of the tooling by the tool holder holding portion of the tooling holding unit, and in a state where the pressing member of the tooling detachment unit is in contact with the rear end of the tooling holding unit and the claw member of the tooling detachment unit is in contact with a contact surface of the tooling holding unit, the pressing member of the tooling detachment unit of the tooling changing device moves forward to release the retracted state of the tool holder of the tooling by the tool holder holding portion of the tooling holding unit, thereby allowing the tooling to be changed. As a result, the above-described problem is further resolved.

The invention according to claim 4 is that, in addition to the configuration of the tooling changing mechanism according to claim 3, the tooling detachment unit of the tooling changing device moves in the left-right direction relative to the tooling magazine of the tooling changing device, when the tooling detachment unit of the tooling changing device is positioned at a predetermined claw accommodation position in the left-right direction relative to the tooling magazine of the tooling changing device, the claw member of the tooling detachment unit of the tooling changing device is accommodated in a recess formed on a rear end side of the tooling holding unit, and the tooling changing device has a positioning means for moving the tooling detachment unit to the claw accommodation position. As a result, the above-described problem is further resolved.

The invention according to claim 5 is that, in addition to the configuration of the tooling changing mechanism according to claim 3, the tooling detachment unit of the tooling changing device has two of the claw members, and recesses having contact surfaces of the tooling holding unit, which come into contact with the claw members, are formed on upper and lower surfaces, which extend in the left-right direction, of the tooling holding unit. As a result, the above-described problem is further resolved.

The invention according to claim 6 is a machine tool comprising: a tooling changing mechanism according to any one of claims 1 to 3; a turret support that supports the turret to be index-rotatable; and a spindle that rotatably grips the workpiece; wherein after the turret has rotated to a predetermined tooling change position, a tooling held by the tooling holding unit is detached from the tooling holding unit outside the machining chamber while being gripped by the tooling magazine of the tooling changing device. As a result, the above-described problem is resolved.

### [Advantageous Effect of Invention]

According to the tooling changing mechanism in the invention according to claim 1, the tooling held by the tooling holding unit is detached from the tooling holding unit outside the machining chamber while being gripped by the tooling magazine of the tooling changing device. As a result, since the tooling is changed outside the machining chamber, the degree of freedom in arranging the turret inside the machining chamber can be increased.

According to the tooling changing mechanism in the invention according to claim 2, the tooling detachment unit of the tooling changing device moves in the left-right direction relative to the tooling magazine of the tooling changing device, and, while the tooling magazine of the tooling changing device grips the tooling held by the tooling holding unit outside the machining chamber, the turret moves in the left-right direction to detach the tooling from the tooling holding unit. As a result, in addition to the effect of the tooling changing mechanism in the invention according to claim 1, since the tooling is detached by moving the turret, the tooling detachment structure can be simplified.

According to the tooling changing mechanism in the invention according to claim 3, in a state where the pressing member of the tooling detachment unit is in contact with the rear end of the tooling holding unit and the claw member of the tooling detachment unit is in contact with a contact surface of the tooling holding unit, the pressing member of the tooling detachment unit of the tooling changing device moves forward to release the retracted state of the tool holder of the tooling by the tool holder holding portion of the tooling holding unit, thereby allowing the tooling to be changed. As a result, in addition to the effect of the tooling changing mechanism in the invention according to claim 1, since the pressing member of the tooling detachment unit pushes the rear end side of the tooling holding unit in a direction away from the tooling detachment unit, while the claw member of the tooling detachment unit pulls the tooling holding unit in a direction toward the tooling detachment unit, the bending moment applied to the turret is offset and the load on the turret when changing tooling can be reduced.

According to the tooling changing mechanism in the invention according to claim 4, the tooling changing device has a positioning means for moving the tooling detachment unit to the claw accommodation position. As a result, in addition to the effect of the tooling changing mechanism in the invention according to claim 3, since the tooling detachment unit can always be positioned to the claw accommodation position when changing the tooling, the tooling can be changed reliably.

According to the tooling changing mechanism in the invention according to claim 5, the tooling detachment unit of the tooling changing device has two of the claw members. As a result, in addition to the effect of the tooling changing mechanism in the invention according to claim 3, since the contact area of the claw members with the contact surfaces of the tooling holding unit is increased, the bending moment applied to the turret can be more reliably offset. In addition, recesses having contact surfaces of the tooling holding unit, which come into contact with the claw members, are formed on upper and lower surfaces, which extend in the left-right direction, of the tooling holding unit. As a result, since one of the claw members comes into contact with the contact surface of the recess formed on the upper surface of the tooling holding unit, and the other of the claw members comes in contact with the contact surface of the recess formed on the lower surface of the tooling holding unit, rotation of the tooling holding unit relative to the turret can be prevented.

According to the machine tool in the invention according to claim 6, the machine tool comprises: a tooling changing mechanism according to any one of claims 1 to 3; a turret support that supports the turret to be index-rotatable; and a spindle that rotatably grips the workpiece; wherein after the turret has rotated to a predetermined tooling change position, a tooling held by the tooling holding unit is detached from the tooling holding unit outside the machining chamber while being gripped by the tooling magazine of the tooling changing device. As a result, since the tooling T is changed outside the machining chamber, the degree of freedom in arranging the turret inside the machining chamber can be increased.

### [Brief Description of Drawings]

Fig. 1 is a perspective view of a machine tool incorporating a tooling changing mechanism according to an example of the present invention.
Fig. 2A is a partially enlarged plan view of the machine tool shown in Fig. 1.
Fig. 2B is a cross-sectional view taken along line IIB-IIB in Fig. 2A.
Fig. 3 is a partial cross-sectional perspective view of tooling shown in Fig. 1.
Fig. 4A is a cross-sectional view taken along line IVA-IVA in Fig. 2B.
Fig. 4B is a cross-sectional view taken along line IVB-IVB in Fig. 4A.
Fig. 5A is a left side view of a tooling changing device shown in Fig. 2B.
Fig. 5B is a front view of the tooling changing device shown in Fig. 2B.
Fig. 5C is a partially enlarged plan view of the tooling changing device shown in Fig. 2B.
Fig. 6A is a partially enlarged plan view illustrating an initial state in a tooling change operation.
Fig. 6B is a cross-sectional view taken along line VIB-VIB in Fig. 6A.
Fig. 7 is a cross-sectional view illustrating the tooling change operation.
Fig. 8A is a left side view showing a state in which the tooling is gripped by a tooling gripping portion of the tooling changing device.
Fig. 8B is a partially enlarged plan view showing a state in which the tooling is gripped by the tooling gripping portion of the tooling changing device.
Fig. 8C is a right perspective view showing a state in which the tooling is gripped by the tooling gripping portion of the tooling changing device.
Fig. 8D is a cross-sectional view taken along line VIIID-VIIID in Fig. 8B.
Fig. 9 is a partial cross-sectional view showing a state in which claw members of a tooling detachment unit are accommodated in recesses of a tooling holding unit.
Fig. 10 is a partial cross-sectional view showing a state in which the claw members of the tooling detachment unit are in contact with contact surfaces of the tooling holding unit.
Fig. 11 is a partial cross-sectional view showing a state in which the tooling holding unit releases the tooling.
Fig. 12A is a plan view showing a state in which a turret has been moved to the left.
Fig. 12B is a partial cross-sectional view taken along line XIIB-XIIB in Fig. 12A.

### [Description of Embodiments]

The specific embodiment of a tooling changing mechanism in the present invention may be arbitrary as long as the tooling changing mechanism for a machine tool comprises: a turret arranged inside a machining chamber and movable in a front-rear direction and a left-right direction perpendicular to the front-rear direction; a tooling holding unit mounted to the turret and configured to detachably hold a tooling, which consists of a rotary tool for machining a workpiece and a tool holder for detachably holding the rotary tool; and a tooling changing device arranged on a rear side of the turret and outside the machining chamber for storing the tooling, wherein the tooling holding unit has a tool holder holding portion extending in the left-right direction, to which the tool holder of the tooling is mounted in a retracted state, the tooling changing device has a tooling magazine for storing the tooling, and a tooling detachment unit for detaching the tooling held by the tooling holding unit from the tooling holding unit, and the tooling held by the tooling holding unit is detached from the tooling holding unit outside the machining chamber while being gripped by the tooling magazine of the tooling changing device, and the degree of freedom in arranging the turret inside the machining chamber is increased.

### [Example 1]

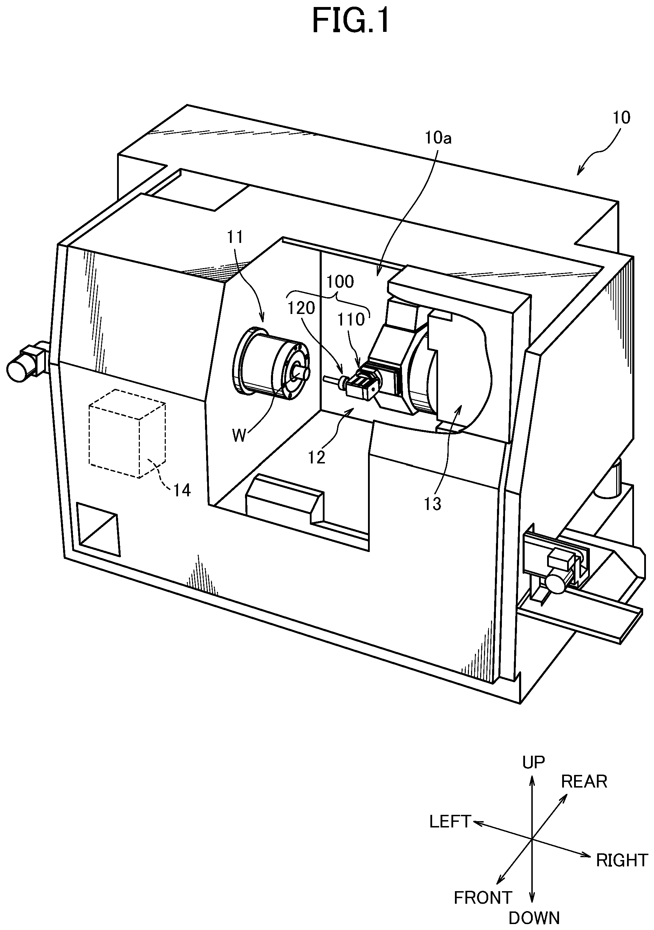

Hereinafter, a tooling changing mechanism and a machine comprising the same according to one example of the present invention will be described below with reference to Figs. 1 to 12B.

### <1. Overview of the Machine Tool>

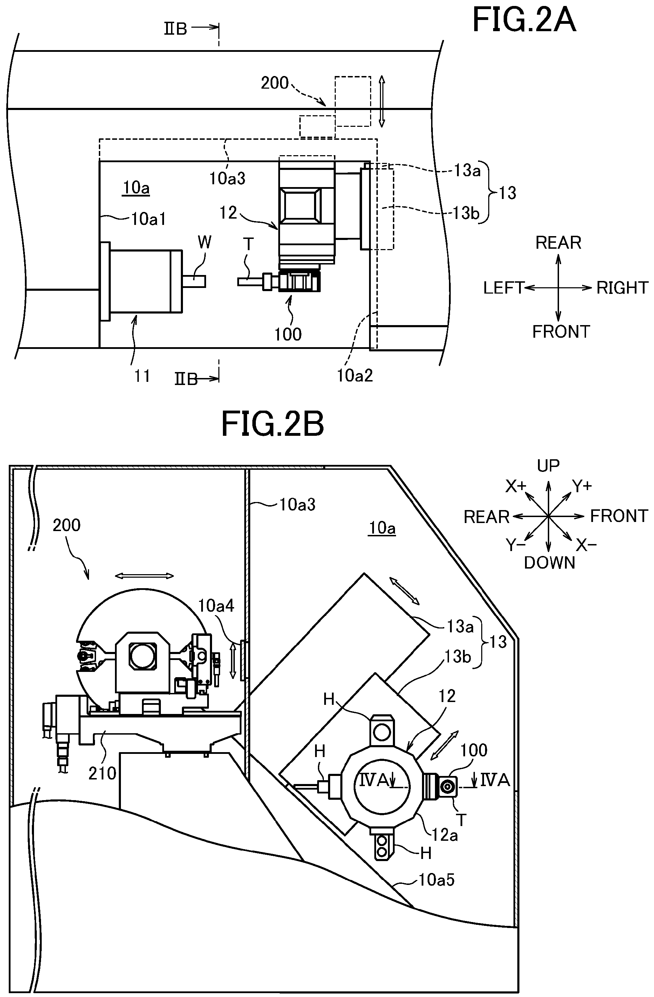

First, an overview of a machine tool 10 will be described with reference to Figs. 1 and 2B.

Fig. 1 is a perspective view of a machine tool incorporating a tooling changing mechanism according to an example of the present invention, Fig. 2A is a partially enlarged plan view of the machine tool shown in Fig. 1, and Fig. 2B is a cross-sectional view taken along line IIB-IIB in Fig. 2A.

The machine tool 10 is an automatic lathe and has a machining chamber 10a in which a workpiece W is machined.

As shown in Fig. 2A, the machining chamber 10a is defined by a left side panel 10a1, a right side panel 10a2, and a rear panel 10a3.

An opening is formed in the rear panel 10a3, and this opening can be freely opened and closed by a shutter 10a4.

As shown in Figs. 1 and 2A, inside the machining chamber 10a, there are arranged a spindle 11 that is provided on the left side panel 10a1 and rotatably and detachably grips the workpiece W, a turret 12 that is arranged facing the spindle 11, and a turret support 13 that supports the turret 12 to be index-rotatable.

As shown in Fig. 2B, the turret 12 has an octagonal shape when viewed from the front.

A tool holder H for holding a cutting tool is detachably mounted to each of turret surfaces 12a, which is a peripheral surface of the turret 12.

A tooling holding unit 100 that detachably holds a tooling T is mounted to one of the turret surfaces 12a.

The turret support 13 has a Z-direction (left-right direction) movement mechanism not shown, an X-direction movement mechanism 13a that is movable in the X-direction, which is the direction along a turret mounting base 10a5 that is inclined with respect to the horizontal plane, and a Y-direction movement mechanism 13b that is provided on the X-direction movement mechanism 13a and is movable in the Y-direction that is perpendicular to the X-direction.

Thus, the turret support 13 is not only movable linearly in the X and Y directions, but also movable in the front-rear and up-down directions (vertical direction) by combining linear movement in the X and Y directions.

Therefore, the turret 12 is also linearly movable in the front-rear, left-right and up-down directions integrally with the turret support 13.

In the following description, the rearward direction in a plane parallel to the turret mounting base 10a5 is referred to as the "X+ direction" and the forward direction as the "X- direction."

Regarding the Y direction, the forward direction is referred to as the "Y+ direction" and the rearward direction is referred to as the "Y- direction."

Further, outside the machining chamber 10a, as shown in Figs. 2A and 2B, there are also arranged a tooling changing device 200 that is arranged on the rear side of the turret 12 and outside the machining chamber 10a and is movable in the front-rear direction, and an change control device 14 that controls the driving of the turret 12, the turret support 13, the tooling changing device 200 and like.

The machine tool 10 configured in this manner allows the turret 12 to approach the workpiece W gripped by the spindle 11 via the turret support 13, and to machine the workpiece W using a tool selected by indexing rotation of the turret 12.

### <2. Structure of the Tooling>

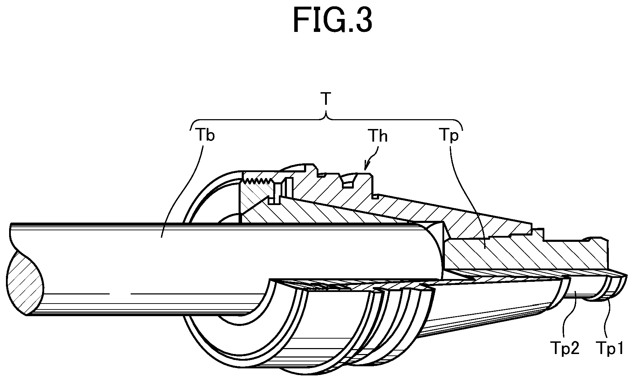

Here, the tooling T that is mounted to the tooling holding unit 100 and stored in the tooling changing device 200 will be described with reference to Fig. 3.

Fig. 3 is a partial cross-sectional perspective view of the tooling shown in Fig. 1.

The tooling T includes a rotary tool Tb such as a drill for machining a workpiece, a tool holder Th for detachably holding the rotary tool Tb, and a pull stud Tp mounted to the rear end of the tool holder Th.

The tool holder Th has a diameter that decreases toward the rear end, that is, is tapered toward the rear end.

The pull stud Tp is inserted into and fixed in a through hole formed in the rear end of the tool holder Th, and is formed of a head portion Tp1 on the rear end side and a constricted portion Tp2 connected to the front side of the head portion Tp1 and having a smaller diameter than the head portion Tp1.

<3. Structure of the Tooling Holding Unit>

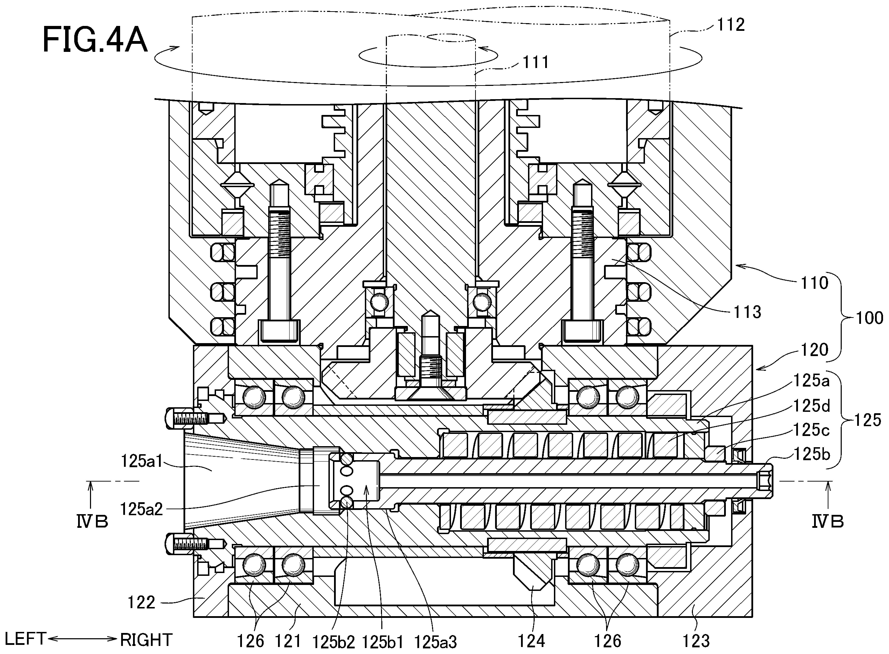

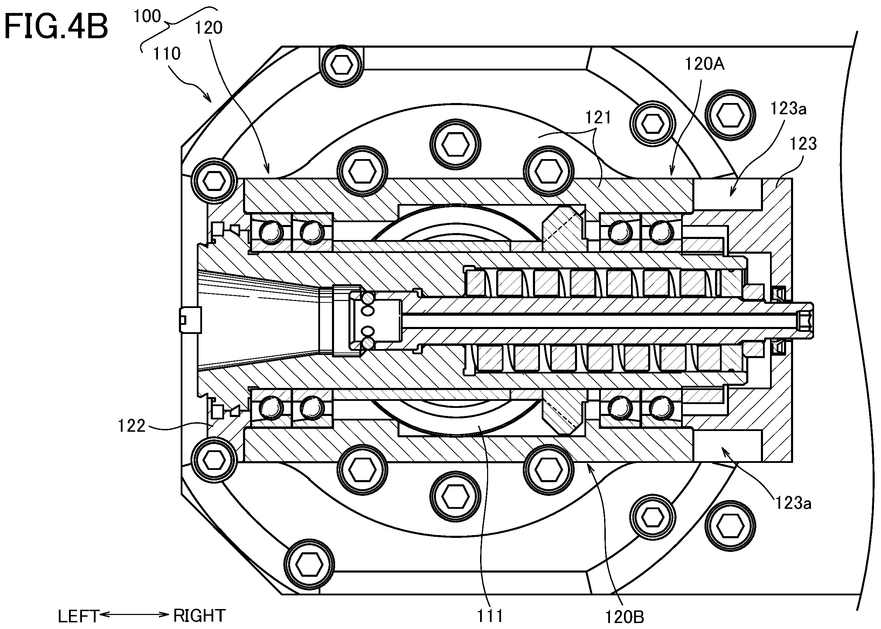

Next, the tooling holding unit 100 will be described with reference to Figs. 1, 4A and 4B.

Fig. 4A is a cross-sectional view taken along line IVA-IVA in Fig. 2B, and Fig. 4B is a cross-sectional view taken along line IVB-IVB in Fig. 4A.

As shown in Figs. 1, 4A and 4B, the tooling holding unit 100 is composed of a fixed housing 110 fixed to the turret 12 and a movable housing 120 that is rotatable relative to the fixed housing 110.

As shown in Fig. 4A, the fixed housing 110 has a tooling drive power transmission shaft 111 connected to a first drive shaft provided on the turret 12, a transmission shaft not shown connected to a second drive shaft provided on the turret 12, a reducer 112 connected to this transmission shaft, and an inner cylinder 113 integral with the reducer 112.

The tooling drive power transmission shaft 111 and the inner cylinder 113 are rotatable independently of each other.

The movable housing 120 has a rectangular tubular housing main body 121 fixed to the inner cylinder 113 of the fixed housing 110, a front lid 122 that closes the front of the housing main body 121, and a rear lid 123 that closes the rear of the housing main body 121.

A recess 123a is formed between the housing main body 121 and the rear lid 123.

The recess 123a is formed on the rear end side of the tooling holding unit 100 (on the right side in Fig. 4B).

As shown in Fig. 4B, the recesses 123a are formed on an upper surface 120A and a lower surface 120B extending in the left-right direction of the movable housing 120.

Inside the housing main body 121, there are provided a cylindrical engagement sleeve 124 that engages with the tooling drive power transmission shaft 111 of the fixed housing 110, and a tool holder holding portion 125 that is inserted into the engagement sleeve 124 and extends in the left-right direction.

The tool holder holding portion 125 is rotatably held relative to the housing main body 121 by bearings 126 provided inside the housing main body 121.

The tool holder holding portion 125 has a cylindrical holder 125a that is integral with the engagement sleeve 124, a draw bar 125b that is inserted into the rear end of the cylindrical holder 125a, a flange 125c that is fixed to the draw bar 125b, and a draw bar biasing spring 125d that biases the flange 125c.

The cylindrical holder 125a has a tooling insertion portion 125a1 into which the tool holder Th of the tooling T is inserted, an intermediate portion 125a2 that communicates with the rear end of the tooling insertion portion 125a1 and extends toward the rear end, and a draw bar insertion portion 125a3 that communicates with the rear end of the intermediate portion 125a2 and into which the draw bar 125b is inserted.

The tooling insertion portion 125a1 has an inner diameter that decreases toward the rear end, that is, is tapered toward the rear end.

The taper of the tooling insertion portion 125a1 is formed to match the taper of the tool holder Th of the tooling T.

The diameter of the intermediate portion 125a2 is slightly larger than the diameter of the rear end of the tool holder Th of the tooling T.

The diameter of the draw bar insertion portion 125a3 is smaller than the diameter of the intermediate portion 125a2.

The draw bar 125b is a cylindrical rod, and a recessed tooling accommodation area 125b1 is formed at the tip of the draw bar 125b.

Additionally, a plurality of engagement ball accommodation holes into which a plurality of engagement balls 125b2 are fitted are formed at intervals around the outer peripheral wall of the tooling accommodation area 125b1.

The diameter of the engagement ball accommodation hole is different on the outer peripheral side and the inner peripheral side, with the diameter of the outer peripheral side being approximately equal to the diameter of the engagement ball 125b2 and the diameter of the inner peripheral side being smaller than the diameter of the engagement ball 125b2.

As a result of the above configuration, when the tip of the draw bar 125b is positioned in the intermediate portion 125a2 of the cylindrical holder 125a, the engagement ball 125b2 moves toward an outer side of the draw bar 125b and does not protrude into an inner side of the draw bar 125b.

Furthermore, when the tip of the draw bar 125b is positioned in the draw bar insertion portion 125a3 of the cylindrical holder 125a, the engagement ball 125b2 is in contact with the wall surface that forms the draw bar insertion portion 125a3, causing the engagement ball 125b2 to protrude toward the inside of the draw bar 125b.

In this state, the inner diameter of the tip portion of the draw bar 125b is smaller than the diameter of the head portion Tp1 of the pull stud Tp of the tooling T and larger than the diameter of the constricted portion Tp2 of the pull stud Tp of the tooling T.

Therefore, when the tooling T is held by the tool holder holding portion 125, the tooling T is inserted into the tooling inserting portion 125a1 with the tip of the draw bar 125b positioned at the intermediate portion 125a2 of the cylindrical holder 125a.

At this time, the engagement ball 125b2 is once caused to protrude toward the outside of the draw bar 125b by the head portion Tp1, and then comes to a position facing the constricted portion Tp2, so that the head portion Tp1 of the pull stud Tp of the tooling T is accommodated in the tooling accommodation area 125b1.

In this state, when the draw bar 125b is retracted until the tip of the draw bar 125b is positioned in the draw bar insertion portion 125a3 of the cylindrical holder 125a, the engagement ball 125b2 protrudes toward the inside of the draw bar 125b and comes into contact with the constricted portion Tp2 of the pull stud Tp of the tooling T.

As a result, the tooling T is held by the tool holder holding portion 125 unless the draw bar 125b moves forward until the tip of the draw bar 125b is positioned at the intermediate portion 125a2 of the cylindrical holder 125a.

The draw bar biasing spring 125d biases the draw bar 125b rearward via the flange 125c.

That is, the draw bar 125b pulls the tooling T while gripping the pull stud Tp of the tooling T by the biasing force of the draw bar biasing spring 125d.

Therefore, the tool holder holding portion 125 mounts the tool holder Th in a state where the tool holder Th of the tooling T is retracted.

### <4. Tooling Changing Device >

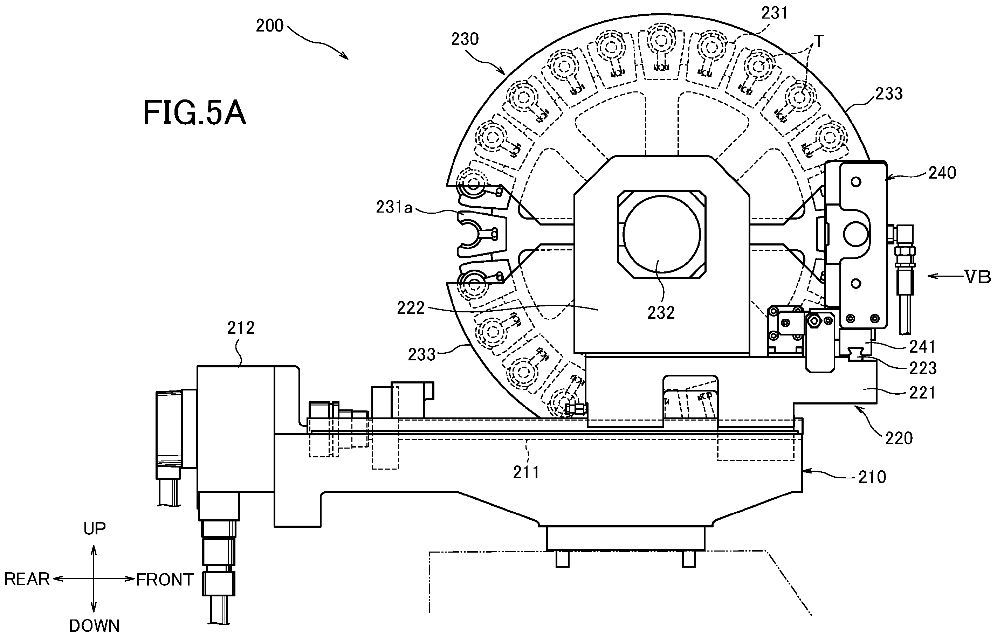

Next, the tooling changing device 200 will be described with reference to Figs. 2B and 5A to 5C.

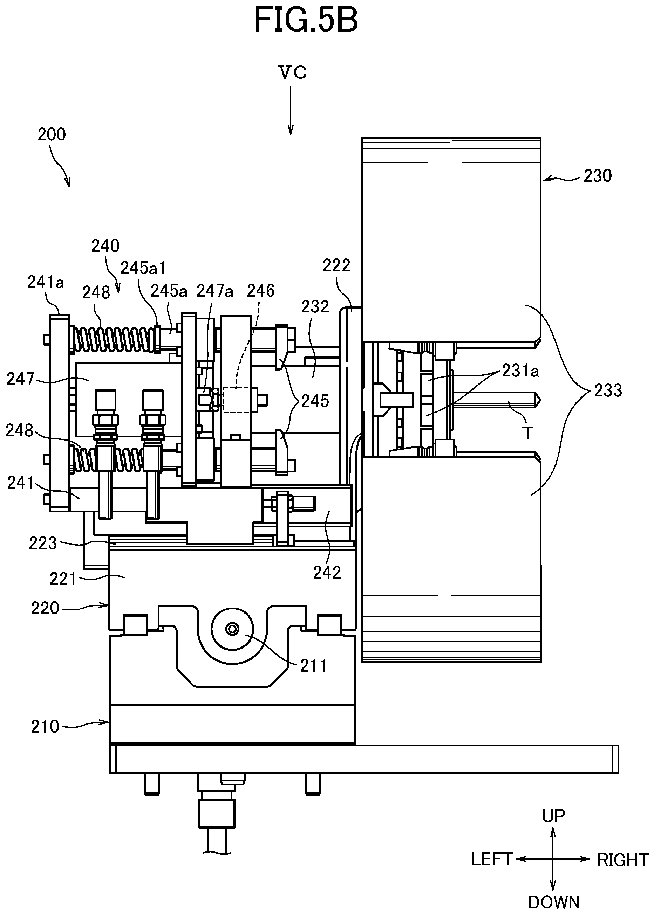

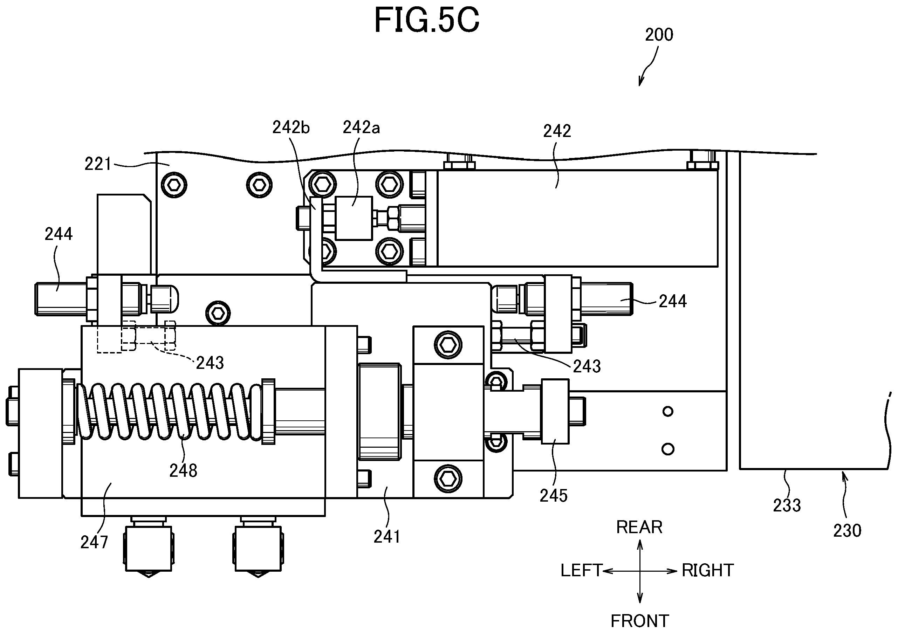

Fig. 5A is a left side view of the tooling changing device shown in Fig. 2B, Fig. 5B is a front view of the tooling changing device shown in Fig. 2B, and Fig. 5C is a partially enlarged plan view of the tooling changing device shown in Fig. 2B.

As shown in Figs. 2B and 5A, the tooling changing device 200 includes a fixed base 210 fixed to the rear of the rear panel 10a3 that forms the machining chamber 10a, a movable base 220 that is movable in the front-rear direction relative to the fixed base 210, a tooling magazine 230 that is mounted on the movable base 220 and stores tooling T, and a tooling detachment unit 240 that is mounted on the movable base 220 and detaches the tooling T mounted to the tooling holding unit 100 from the tooling holding unit 100.

### <4. 1. Fixed Base >

As shown in Fig. 5A and the like, the fixed base 210 has a rotation shaft 211 extending in the front-rear direction and a drive motor 212 that rotates the rotation shaft 211.

### <4. 2. Movable Base >

As shown in Figs. 5A and 5B, the movable base 220 has a base body 221 that is threadably engaged with the rotation shaft 211 of the fixed base 210 and moves forward and backward in the front-rear direction as the rotation shaft 211 rotates, a magazine mounting base 222 that rises from the rear side of the base body 221, and a rail 223 that is positioned on the front side of the base body 221 and extends in the left-right direction.

### <4. 3. Tooling Magazine>

As shown in Fig. 5A, the tooling magazine 230 has a wheel-shaped base 231 that accommodates a plurality of tooling T, a motor 232 that rotates the base 231, and a cover 233 that covers the base 231.

A plurality of bifurcated tooling gripping portions 231a are provided at the tip of the base 231.

### <4. 4. Tooling Detachment Unit>

As shown in Figs. 5A to 5C, the tooling detachment unit 240 has a unit base 241 arranged on the rail 223 of the movable base 220, an air cylinder 242 that moves the unit base 241 forward and backward in the left-right direction, a stopper 243 that limits the movable range of the unit base 241, a detection switch 244 that detects when the unit base 241 comes into contact with the stopper 243, a pair of claw members 245 that are mounted to the unit base 241 and extend in the up-down direction, a pressing member 246 provided between the two claw members 245, a hydraulic cylinder 247 that moves the pressing member 246 forward and backward in the left-right direction, and a claw member biasing spring 248 that biases the claw member 245 to the right.

As shown in Fig. 5C, the air cylinder 242 has an L-shaped connecting member 242b mounted to the tip of a cylinder rod 242a.

The connecting member 242b is connected to the unit base 241.

Therefore, the tooling detachment unit 240 is movable in the left-right direction relative to the tooling magazine 230.

The pair of claw members 245 are movable forward and backward parallel to the movement direction of the pressing member 246, and as shown in Fig. 5B, are provided above and below the pressing member 246.

The rear end (the left end in Fig. 5B) of the pressing member 246 is connected to a cylinder rod 247a of the hydraulic cylinder 247.

The hydraulic cylinder 247 is a hydraulic cylinder whose cylinder chamber is filled with hydraulic oil.

This hydraulic cylinder 247 allows the cylinder rod 247a (i.e., the pressing member 246) to move forward and backward by adjusting the amount of hydraulic oil in the cylinder chamber with a pump not shown.

The output of the hydraulic cylinder 247 can be made larger than the biasing force of the claw member biasing spring 248 and the biasing force of the draw bar biasing spring 125d of the tooling holding unit 100.

Since the pressing member 246 and the hydraulic cylinder 247 are configured as described above, the pressing member 246 presses the rear end of the draw bar 125b of the tooling holding unit 100 to be capable of releasing the retracted state of the tool holder Th of the tooling T by the tool holder holding portion 125 of the tooling holding unit 100.

One end of the claw member biasing spring 248 presses a wall member 241a standing upright from the left end of the unit base 241, and the other end of the claw member biasing spring 248 presses a flange 245a1 of a claw holding shaft 245a connected to the claw member 245 and extending in the left-right direction.

### <5. Tooling Change Operation >

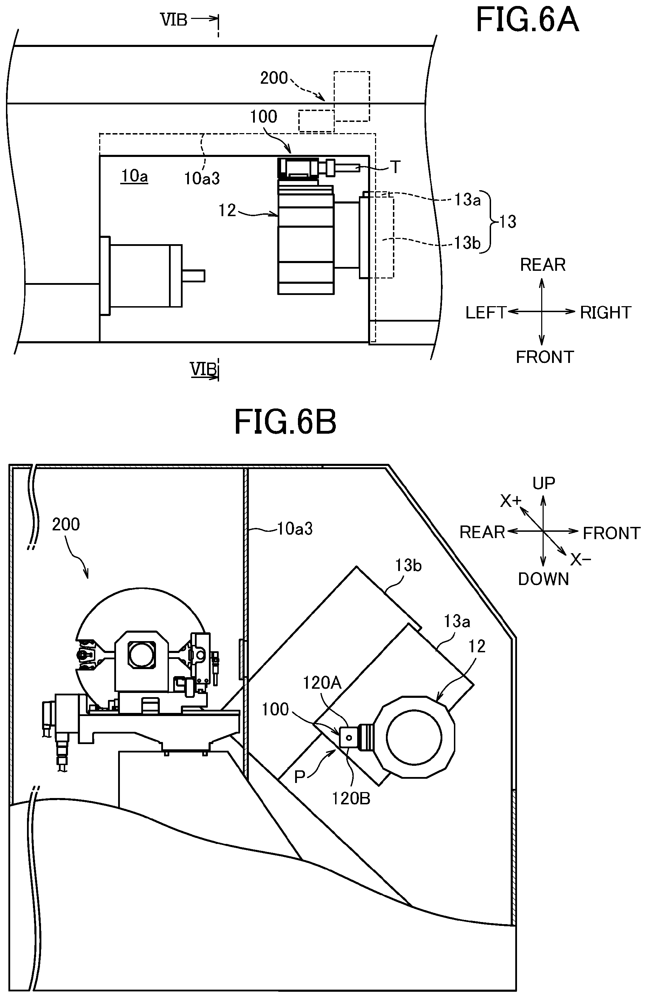

Next, an example of a tooling change operation by the tooling changing mechanism of machine tool 10, which is composed of the turret 12, the tooling holding unit 100, the tooling changing device 200, and the change control device 14, will be described with reference to Figs. 6A to 12B.

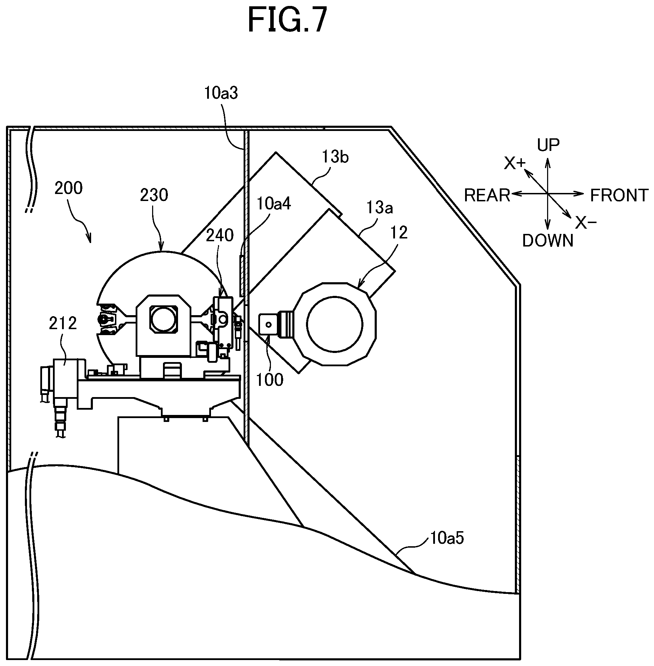

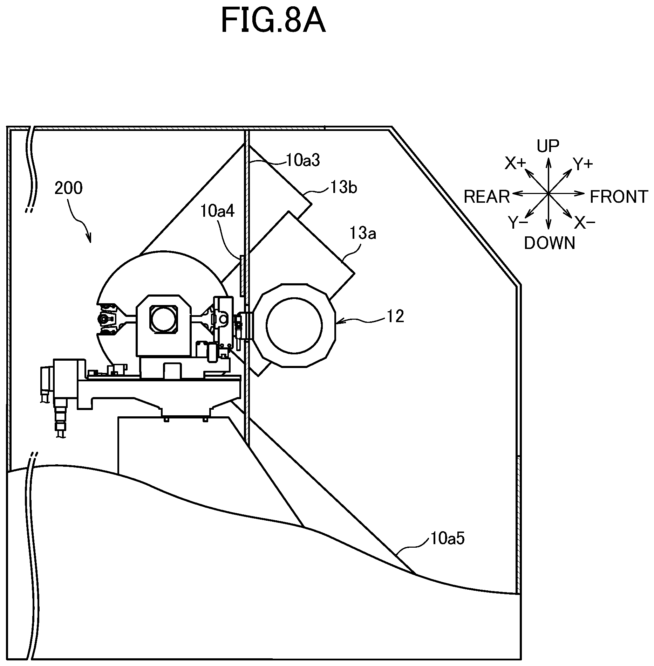

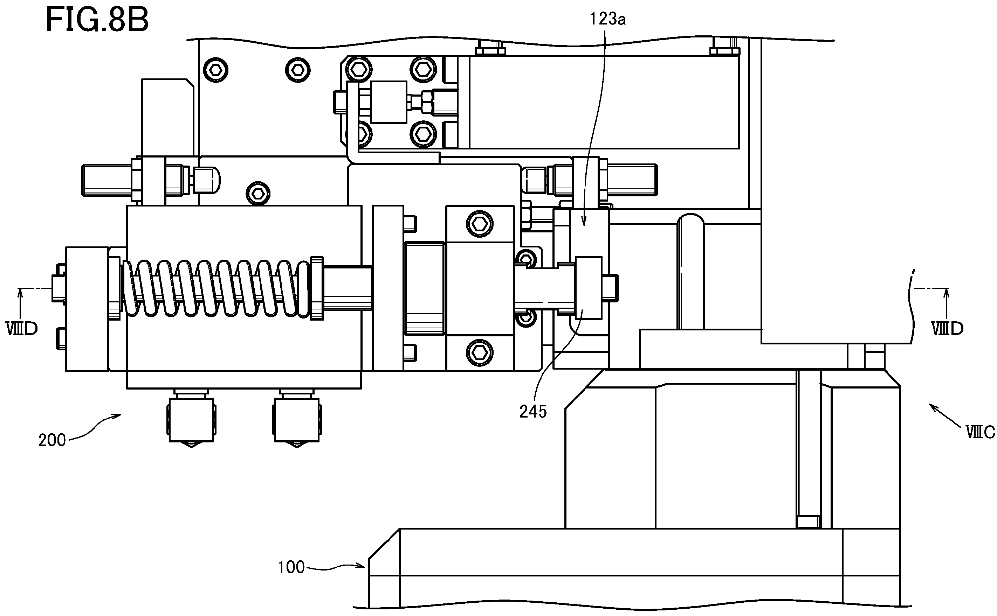

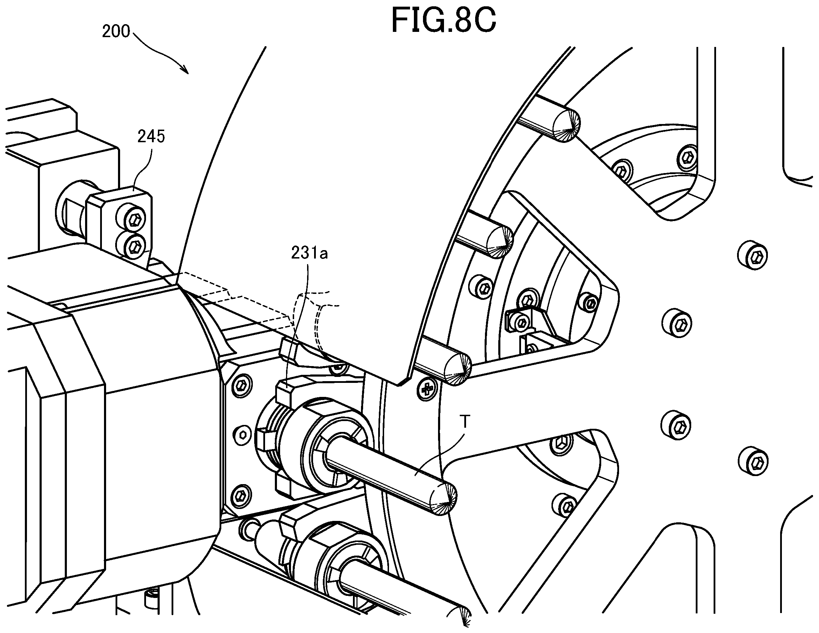

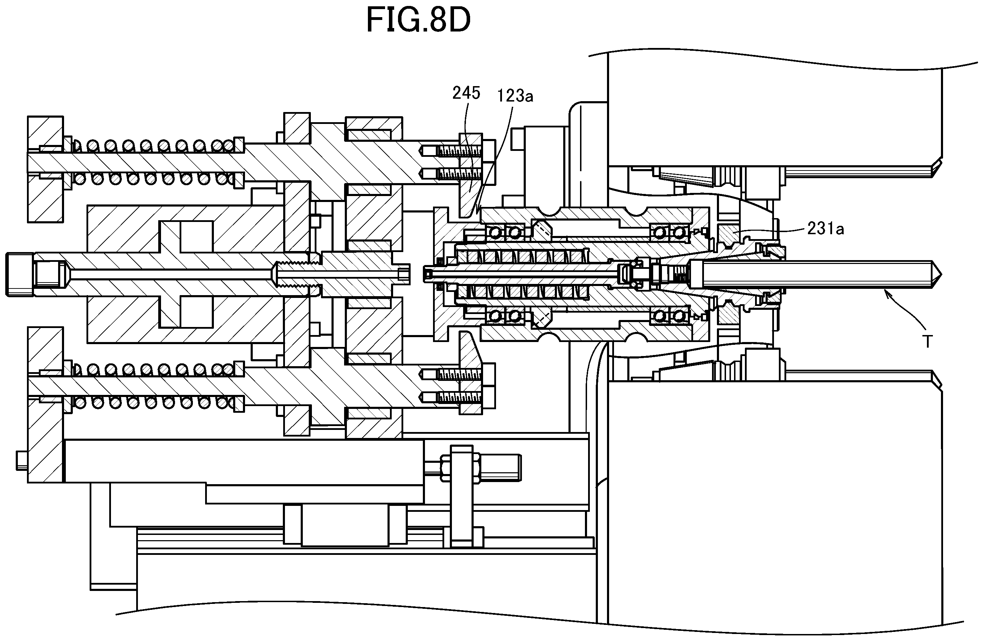

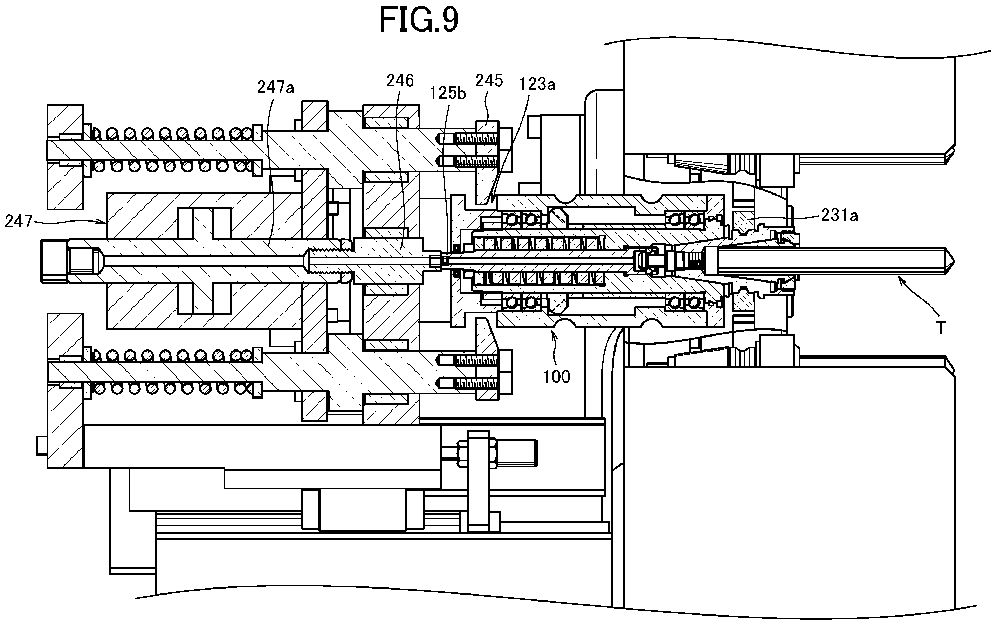

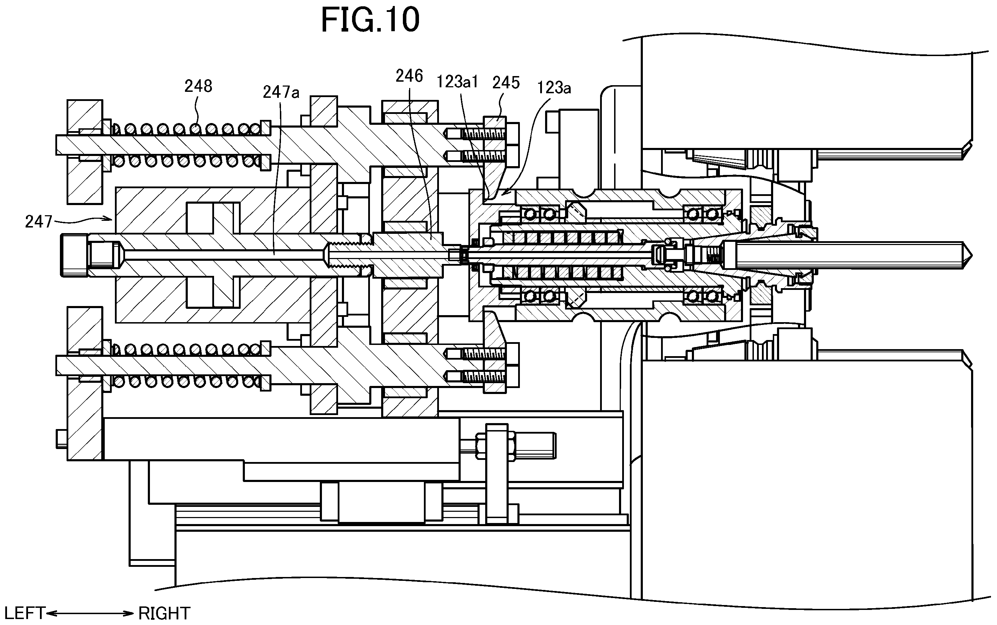

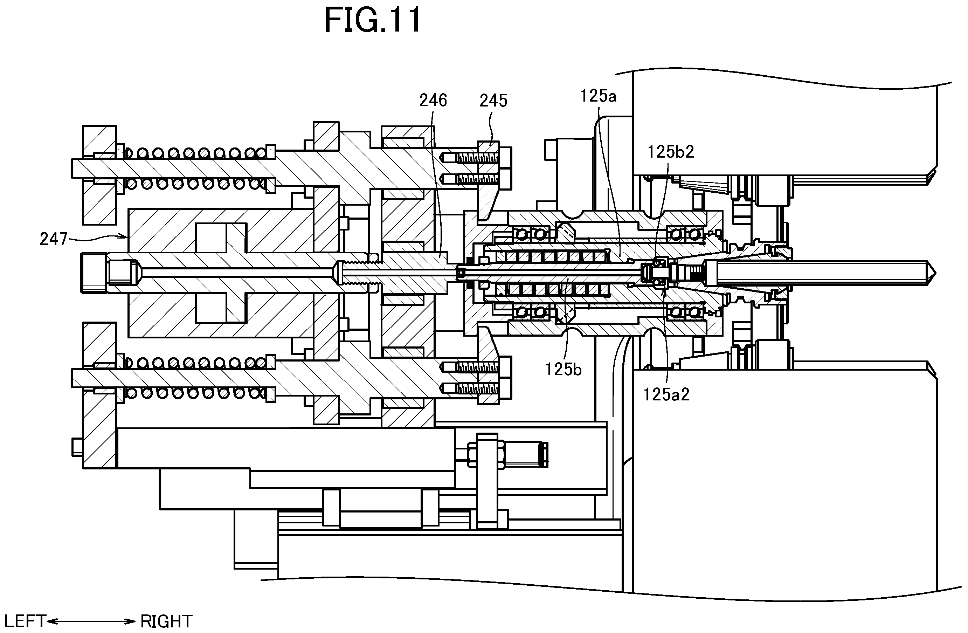

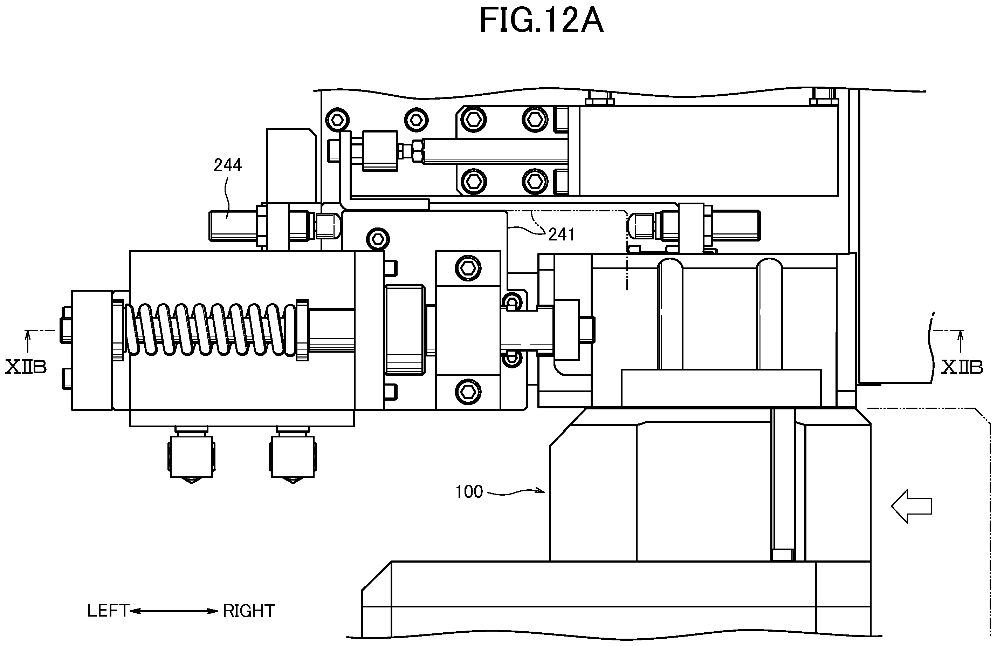

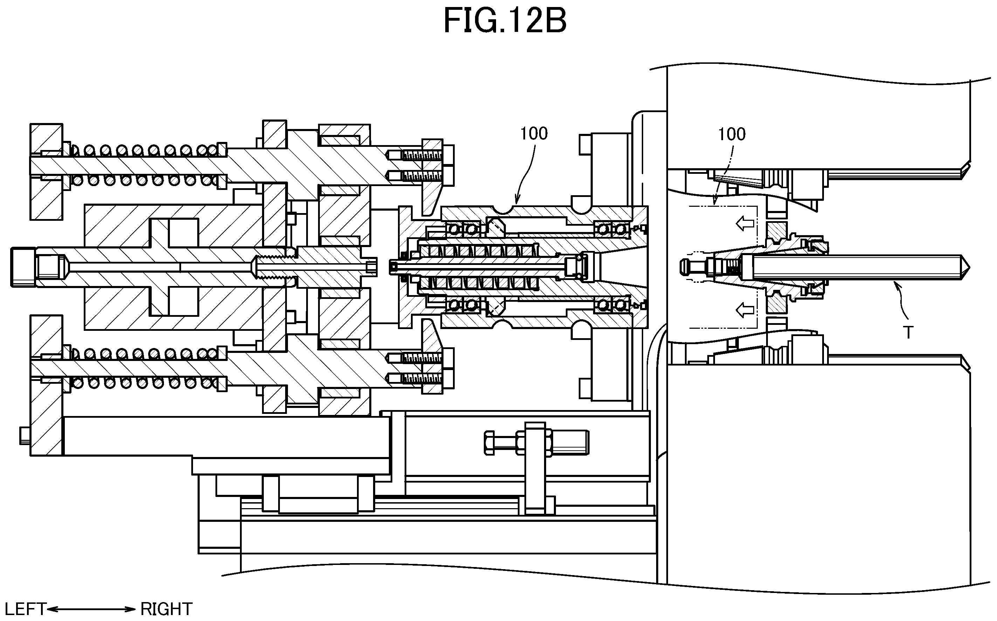

Fig. 6A is a partially enlarged plan view illustrating an initial state in the tooling change operation, Fig. 6B is a cross-sectional view taken along line VIB-VIB in Fig. 6A, Fig. 7 is a cross-sectional view illustrating the tooling change operation, Fig. 8A is a left side view showing a state in which the tooling is gripped by a tooling gripping portion of the tooling changing device, Fig. 8B is a partially enlarged plan view showing a state in which the tooling is gripped by the tooling gripping portion of the tooling changing device, Fig. 8C is a right perspective view showing a state in which the tooling is gripped by the tooling gripping portion of the tooling changing device, Fig. 8D is a cross-sectional view taken along line VIIID-VIIID in Fig. 8B, Fig. 9 is a partial cross-sectional view showing a state in which claw members of a tooling detachment unit are accommodated in recesses of a tooling holding unit, Fig. 10 is a partial cross-sectional view showing a state in which the claw members of the tooling detachment unit are in contact with contact surfaces of the tooling holding unit, Fig. 11 is a partial cross-sectional view showing a state in which the tooling holding unit releases the tooling, Fig. 12A is a plan view showing a state in which a turret has been moved to the left, and Fig. 12B is a partial cross-sectional view taken along line XIIB-XIIB in Fig. 12A.

Here, in Figs. 6A, 6B, 7, and 8A, the tool holder H is omitted.

First, the change control device 14 indexes the turret 12 to bring the tooling holding unit 100 holding the tooling T to a tooling change position P (a position where the tooling T faces the rear panel 10a3) as shown in Fig. 6B, and also rotates the movable housing 120 of the tooling holding unit 100 so that the tooling T faces rightward (the direction in which the workpiece W protrudes from the spindle 11 in Fig. 6A) as shown in Fig. 6A.

At this time, the air cylinder 242 serving as a positioning means is driven to move the unit base 241 (i.e., the tooling detachment unit 240) to a predetermined claw accommodation position.

When the tooling holding unit 100 reaches the tooling change position P, the upper surface 120A and the lower surface 120B are approximately horizontal in the front-rear direction, as shown in Fig. 6B.

From this state, the drive motor 212 of the tooling changing device 200 is driven to move the tooling magazine 230 and the tooling detachment unit 240 forward and close to the rear panel 10a3 as shown in Fig. 7, and the shutter 10a4 provided on the rear panel 10a3 is opened.

Furthermore, the X-direction movement mechanism 13a of the turret support 13 is driven to move the turret 12 to a position where the tooling holding unit 100 directly faces the opening formed in the rear panel 10a3.

Next, as shown in Fig. 8A, the X-direction movement mechanism 13a and the Y-direction movement mechanism 13b of the turret support 13 are driven to move the turret 12 rearward until the tooling holding unit 100 is positioned behind the rear panel 10a3.

At this time, since the unit base 241 is positioned at a predetermined claw accommodation position, the claw members 245 of the tooling detachment unit 240 are accommodated in the recess 123a of the tooling holding unit 100 as shown in Figs. 8B and 8D, and the tooling gripping portions 231a of the tooling magazine 230 grip the tooling T as shown in Figs. 8C and 8D.

Next, a pump not shown is driven to supply oil into the cylinder chamber of the hydraulic cylinder 247, as shown in Fig. 9, to move the cylinder rod 247a forward and bring the cylinder rod 247a into contact with the draw bar 125b of the tooling holding unit 100.

Furthermore, when oil is supplied into the cylinder chamber of the hydraulic cylinder 247, a reaction force from the draw bar 125b of the tooling holding unit 100 acts on the hydraulic cylinder 247 via the pressing member 246, and the hydraulic cylinder 247 and the claw member 245 integrated with the hydraulic cylinder 247 move to the left against the biasing force of the claw member biasing spring 248.

As a result, as shown in Fig. 10, the claw member 245 comes into contact with a contact surface 123a1 of the recess 123a of the tooling holding unit 100.

When oil is further supplied into the cylinder chamber of the hydraulic cylinder 247 from this state, the pressing member 246 presses the draw bar 125b of the tooling holding unit 100 to the right because the hydraulic cylinder 247 is positioned in the left-right direction at a predetermined position.

As a result, as shown in Fig. 11, the draw bar 125b moves forward (to the right in Fig. 11) until the engagement ball 125b2 of the draw bar 125b is positioned at the intermediate portion 125a2 of the cylindrical holder 125a, and the retracted state of the tool holder Th of the tooling T by the tool holder holding portion 125 of the tooling holding unit 100 is released.

From this state, as shown in Fig. 12A, when the turret 12 is moved to the left until the detection switch 244 on the left side (the side closer to the spindle 11 in the present example) detects contact with the unit base 241, the tooling T is detached from the tooling holding unit 100 as shown in Fig. 12B.

That is, in the present example, while the tooling magazine 230 of the tooling changing device 200 grips the tooling T held by the tooling holding unit 100 outside the machining chamber 10a, the chang control device 14 brings the pressing member 246 of the tooling detachment unit 240 into contact with the rear end of the tooling holding unit 100 and brings the claw member 245 of the tooling detachment unit 240 into contact with the contact surface 123a1 of the tooling holding unit 100, and then moves the turret 12 in the left-right direction to detach the tooling T from the tooling holding unit 100.

In addition, when the claw member 245 of the tooling detachment unit 240 is accommodated in the recess 123a of the tooling holding unit 100, the pressing member 246 of the tooling detachment unit 240 is movable forward and backward toward the rear end of the tooling holding unit 100 (i.e., the draw bar 125b).

### <6. Effects of the Machine Tool of the Present Example>

As described above, according to the machine tool 10 and the tooling changing mechanism, which are one example of the present invention, the change control device 14 detaches the tooling T held by the tooling holding unit 100 from the tooling holding unit 100 outside the machining chamber 10a while being gripped by the tooling magazine 230 of the tooling changing device 200. As a result, since the tooling T is changed outside the machining chamber 10a, the degree of freedom in arranging the turret 12 inside the machining chamber 10a can be increased.

Furthermore, the tooling detachment unit 240 of the tooling changing device 200 moves in the left-right direction relative to the tooling magazine 230 of the tooling changing device 200, and, while the tooling magazine 230 of the tooling changing device 200 grips the tooling T held by the tooling holding unit 100 outside the machining chamber 10a, the change control device 14 moves the turret 12 in the left-right direction to detach the tooling T from the tooling holding unit 100. As a result, since the tooling T is detached by moving the turret 12, the tooling detachment structure can be simplified.

Furthermore, in a state where the pressing member 246 of the tooling detachment unit 240 is in contact with the rear end of the tooling holding unit 100 and the claw member 245 of the tooling detachment unit 240 is in contact with the contact surface 123a1 of the tooling holding unit 100, the change control device 14 moves the pressing member 246 of the tooling detachment unit 240 of the tooling changing device 200 forward to release the retracted state of the tool holder Th of the tooling T by the tool holder holding portion 125 of the tooling holding unit 100, thereby allowing the tooling T to be changed. As a result, since the pressing member 246 of the tooling detachment unit 240 pushes the rear end side of the tooling holding unit 100 in a direction away from the tooling detachment unit 240, while the claw member 245 of the tooling detachment unit 240 pulls the tooling holding unit 100 in a direction toward the tooling detachment unit 240, the bending moment applied to the turret 12 is offset and the load on the turret 12 when changing tooling can be reduced.

Furthermore, the tooling changing device 200 has the air cylinder 242 which is a positioning means for moving the tooling detachment unit 240 to the claw accommodation position. As a result, since the tooling detachment unit 240 can always be positioned to the claw accommodation position when changing the tooling T, the tooling T can be changed reliably.

Furthermore, the tooling detachment unit 240 of the tooling changing device 200 has two of the claw members 245. As a result, since the contact area of the claw members 245 with the contact surfaces 123a1 of the tooling holding unit 100 is increased, the bending moment applied to the turret 12 can be more reliably offset. In addition, the recesses 123a having the contact surfaces 123a1 of the tooling holding unit 100, which come into contact with the claw members 245, are formed on the upper surface 120A and the lower surface 120B, which extend in the left-right direction, of the tooling holding unit 100. As a result, since one of the claw members 245 comes into contact with the contact surface 123a1 of the recess 123a formed on the upper surface 120A of the tooling holding unit 100, and the other of the claw members 245 comes in contact with the contact surface 123a1 of the recess 123a formed on the lower surface 120B of the tooling holding unit 100, rotation of the tooling holding unit 100 relative to the turret 12 can be prevented.

### < Modified Example >

The example of the present invention has been described above. However, the present invention is not limited to the above-described example.

For example, in the present example, the turret 12 is formed with eight turret surfaces 12a, but the number of turret surfaces formed on the turret is not limited to this.

### [Reference Signs List]

- 10: machine tool
- 10a: machining chamber
- 10a1: left side panel
- 10a2: right side panel
- 10a3: rear panel
- 10a4: shutter
- 10a5: turret mounting base
- 11: spindle
- 12: turret
- 12a: turret surface
- 12b: rotation drive force transmission shaft
- 13: turret support
- 13a: X-direction movement mechanism
- 13b: Y-direction movement mechanism
- 14: change control device

- 100: tooling holding unit
- 110: fixed housing
- 111: tooling drive power transmission shaft
- 112: reducer
- 113: inner cylinder
- 120: movable housing
- 120A: upper surface
- 120B: lower surface
- 121: housing main body
- 122: front lid
- 123: rear lid
- 123a: recess
- 123a1: contact surface
- 124: engagement sleeve
- 125: tool holder holding portion
- 125a: cylindrical holder
- 125a1: tooling insertion portion
- 125a2: intermediate portion
- 125a3: draw bar insertion portion
- 125b: draw bar
- 125b1: tooling accommodation area
- 125b2: engagement ball
- 125c: flange
- 125d: draw bar biasing spring
- 126: bearing

- 200: tooling changing device
- 210: fixed base
- 211: rotation shaft
- 212: drive motor
- 220: movable base
- 221: base body
- 222: magazine mounting base
- 223: rail
- 230: tooling magazine
- 231: base
- 231a: tooling gripping portion
- 232: motor
- 233: cover
- 240: tooling detachment unit
- 241: unit base
- 241a: wall member
- 242: air cylinder (positioning means)
- 242a: cylinder rod
- 242b: connecting member
- 243: stopper
- 244: detection switch
- 245: claw member
- 245a: claw holding shaft
- 245a1: flange
- 246: pressing member
- 247: hydraulic cylinder
- 247a: cylinder rod
- 248: claw member biasing spring

- T: tooling
- Tb: rotary tool
- Th: Tool holder
- Tp: pull stud
- Tp1: head portion
- Tp2: constricted portion
- W: workpiece
- H: tool holder
- B: fitting bolt
- P: tooling change position

## Claims

1. A tooling changing mechanism for a machine tool comprising: a turret arranged inside a machining chamber and movable in a front-rear direction and a left-right direction perpendicular to the front-rear direction;
a tooling holding unit mounted to the turret and configured to detachably hold a tooling, which consists of a rotary tool for machining a workpiece and a tool holder for detachably holding the rotary tool; and
a tooling changing device arranged on a rear side of the turret and outside the machining chamber for storing the tooling, wherein
the tooling holding unit has a tool holder holding portion extending in the left-right direction, to which the tool holder of the tooling is mounted in a retracted state,
the tooling changing device has a tooling magazine for storing the tooling, and a tooling detachment unit for detaching the tooling held by the tooling holding unit from the tooling holding unit, and
the tooling held by the tooling holding unit is detached from the tooling holding unit outside the machining chamber while being gripped by the tooling magazine of the tooling changing device.

2. The tooling changing mechanism according to claim 1, wherein the tooling detachment unit of the tooling changing device moves in the left-right direction relative to the tooling magazine of the tooling changing device, and, while the tooling magazine of the tooling changing device grips the tooling held by the tooling holding unit outside the machining chamber, the turret moves in the left-right direction to detach the tooling from the tooling holding unit.

3. The tooling changing mechanism according to claim 1, wherein the tooling detachment unit of the tooling changing device has a pressing member movable forward and backward toward a rear end of the tooling holding unit, and a claw member movable forward and backward parallel to a movement direction of the pressing member,
the pressing member of the tooling detachment unit of the tooling changing device presses the rear end of the tooling holding unit to release the retracted state of the tool holder of the tooling by the tool holder holding portion of the tooling holding unit, and
in a state where the pressing member of the tooling detachment unit is in contact with the rear end of the tooling holding unit and the claw member of the tooling detachment unit is in contact with a contact surface of the tooling holding unit, the pressing member of the tooling detachment unit of the tooling changing device moves forward to release the retracted state of the tool holder of the tooling by the tool holder holding portion of the tooling holding unit, thereby allowing the tooling to be changed.

4. The tooling changing mechanism according to claim 3, wherein the tooling detachment unit of the tooling changing device moves in the left-right direction relative to the tooling magazine of the tooling changing device,
when the tooling detachment unit of the tooling changing device is positioned at a predetermined claw accommodation position in the left-right direction relative to the tooling magazine of the tooling changing device, the claw member of the tooling detachment unit of the tooling changing device is accommodated in a recess formed on a rear end side of the tooling holding unit, and
the tooling changing device has a positioning means for moving the tooling detachment unit to the claw accommodation position.

5. The tooling changing mechanism according to claim 3, wherein the tooling detachment unit of the tooling changing device has two of the claw members, and
recesses having contact surfaces of the tooling holding unit, which come into contact with the claw members, are formed on upper and lower surfaces, which extend in the left-right direction, of the tooling holding unit.

6. A machine tool comprising: a tooling changing mechanism according to any one of claims 1 to 3;
a turret support that supports the turret to be index-rotatable; and
a spindle that rotatably grips the workpiece; wherein
after the turret has rotated to a predetermined tooling change position, a tooling held by the tooling holding unit is detached from the tooling holding unit outside the machining chamber while being gripped by the tooling magazine of the tooling changing device.
